(19) Europäisches Patentamt
European Patent Office
Office européen des brevets

(11) **EP 4 676 070 A1**

(12) **EUROPEAN PATENT APPLICATION**

(43) Date of publication:
**07.01.2026 Bulletin 2026/02**

(21) Application number: 24306120.7

(22) Date of filing: **05.07.2024**

(51) International Patent Classification (IPC):
*H04N 21/854* (2011.01)    *H04N 21/44* (2011.01)
*H04N 21/81* (2011.01)    *H04N 21/234* (2011.01)
*H04N 21/8543* (2011.01)    *H04N 19/25* (2014.01)
*G06T 13/40* (2011.01)

(52) Cooperative Patent Classification (CPC):
H04N 21/85406; G06T 13/40; H04N 19/25;
H04N 21/23412; H04N 21/44012; H04N 21/8146;
H04N 21/8543

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **GOSSELIN, Philippe Henri**
 **35235 THORIGNE-FOUILLARD (FR)**
• **LE CLERC, Francois**
 **35590 L'HERMITAGE (FR)**
• **AVRIL, Quentin**
 **35830 BETTON (FR)**

(74) Representative: **Interdigital**
**Immeuble ZEN 2**
**845 A, avenue des Champs Blancs**
**35510 Cesson-Sévigné (FR)**

(54) **AVATAR "LOOK AT" GAZE IN SCENE DESCRIPTIONS**

(57) Methods, apparatus and data stream are provided encoding, transmitting and decoding of the "look at" gaze of an avatar. The generated scene description comprises information for getting the avatar looking at a given point in the virtual three-dimensional (3D) space.

Different animations and related parameters are described in a generic format for each eye (or equivalent object's subcomponent) that allows to finely animate the eye(s) of an avatar, in particular to permit a "look at a point" animation type.

**Figure 2**

EP 4 676 070 A1

**Description**

**1. Technical Field**

The present principles generally relate to the domain of encoding for 3D scene representations. In particular, the present principles relate to the encoding, transmitting and decoding of the "look at" gaze of an avatar. The generated scene description comprises information for getting the avatar looking at a given point in the virtual three-dimensional (3D) space.

**2. Background**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Current Scene Description (SD) formats (like MPEG-I Scene Description) allow the definition of an avatar model. Thanks to these features, rendering applications can know which mesh is an avatar, and use it as such. For instance, if the avatar is a usual human body mesh, an application can place it in a scene, and let the user move it in the world. Avatars usually have eyes (or sensors etc.) that show where they are looking at. Assuming there are animations for these components in the scene description, a rendering application can animate eyes to show the avatar gaze direction. However, there is no information in existing formats about which animations are related to eyes and how to use them: the application must have this knowledge beforehand. Animations can have names: as a result, one can use names related to eyes (like "eyesHorizontalGaze") to help the application recognize which ones are for gaze. However, there is no standard or convention for these names, and still no obvious information about the usage of these animations. For instance, glTF files do not inform about the angle range an eye animation can provide nor at which speed the eye should be rotated. It is possible to encode the avatar angular gaze in scene descriptions. Thanks to this data, an application knows how to rotate the eyes of an avatar along three axes. Unfortunately, this solution does not allow both eyes to point to a specific location in the virtual 3D space that is close to the avatar: the same rotation must be used for each eye, as if they were looking at some point infinitely far from the avatar. For instance, if the avatar is a human and wants to look at the top of its nose, it is not possible to get the left eye rotated to the right and the right eye rotated to the left.

Thus, there is a lack of a solution for encoding and transmitting look-at gaze information within the scene description so the renderer can seamlessly use these information to animate the eyes (or comparable objects like cameras for a robot or lights for a car, for example).

**3. Summary**

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The domain addressed by the present principles is the avatar interoperability, where a user manages an avatar encoded into one or more files (e.g. glTF). It is required that the avatar files contain every information that a rendering application needs to implement the expected features: the application must not have to provide extra data or make choices about possible setups. The present principles relate to the "look at" gaze feature, which allows a rendering application to animate avatars such as their eyes are looking at a point in space it can look at. The number of eyes is free and can be of any kind: they are not limited to two human eyes. It applies to any avatar having rotatable at least one subcomponent having a gaze feature. For example, an eye can be the lights of a car for instance or cameras of a robot. Moving and eye can also bring changes to the avatar. For example, rotating an eye can also change the eyelids, or also rotate the head. For non-human avatars, changes can be of any kind, for example the colors lights of a car can change depending on the angles.

The present principles relate to a method that comprises obtaining a three-dimensional (3D) scene comprising one or more avatars having one or more subcomponents having rotatable gaze feature. A subcomponent is classically an eye but may be another rotatable subcomponent of an avatar. The method further comprises generating a scene description comprising a scene graph, wherein nodes corresponding to the one or more subcomponents comprise a gaze information indicating a type of animation for the one or more subcomponents and parameters to run the animation and encoding the 3D scene and the scene description in a data stream.

In an embodiment, the type of animation belongs to a group of types comprising angular type and wherein parameters comprise an horizontal rotation, a vertical rotation and a roll rotation, and look at a point type wherein parameters comprise a style parameter, a speed parameter and a list of properties for the gaze of each of the one or more subcomponents of the avatar. In another embodiment, properties for the gaze of each of the one or more subcomponents of the avatar belong to a group of properties comprising: properties for horizontal animation, properties for vertical animation, coordinates of the center of the subcomponent, forward axis, and bottom-up axis.

The present principles also relate to a device comprising a processor and a memory associated with the processor that is configured to implement the above method according to any one of the embodiments described herein.

The present principles also relate to a method that comprises decoding a three-dimensional scene comprising one or more avatars having one or more subcomponents having rotatable gaze feature from a data stream, comprising a scene description comprising a scene graph, wherein nodes corresponding to the one or more subcomponents comprise a gaze information indicating a type of animation for the at least one component and parameters to run the animation. The method further comprises rendering the 3D scene rand run the animations of the one or more subcomponents according to their parameters.

In an embodiment, the type of animation belongs to a group of types comprising angular type and wherein parameters comprise an horizontal rotation, a vertical rotation and a roll rotation, and look at a point type wherein parameters comprise a style parameter, a speed parameter and a list of properties for the gaze of each of the one or more subcomponents of the avatar. In another embodiment, properties for the gaze of each of the one or more subcomponents of the avatar belong to a group of properties comprising: properties for horizontal animation, properties for vertical animation, coordinates of the center of the subcomponent, forward axis, and bottom-up axis.

The present principles also relate to a device comprising a processor and a memory associated with the processor that is configured to implement the above method according to any one of the embodiments described herein.

The present principles also relate to a data stream comprising data representative of a scene description, data representative of two or more animations, wherein each animation comprises a one or more animation channels, wherein each channel targets one property of one node of a scene description, and data representative of a mixing strategy for one or more property kinds.

## 4. Brief Description of Drawings

The present disclosure will be better understood, and other specific features and advantages will emerge upon reading the following description, the description making reference to the annexed drawings wherein:

- **Figure 1** illustrates how a "look at" gaze can be used with an avatar according to the present principles;
- **Figure 2** shows how an object like an eye may rotate on the horizontal plane according to the present principles;
- **Figure 3** shows an example architecture of a device 30 which may be configured to implement avatar look at gaze in scene description methods according to embodiments of the present principles;
- **Figure 4** shows an example of an embodiment of the syntax of a stream when the data are transmitted over a packet-based transmission protocol;
- **Figure 5** diagrammatically shows the parsing of a node with support of the MPEG_node_avatar extension according to the present principles;
- **Figure 6** shows the parsing of the "gaze" property in MPEG_node_avatar according to the present principles;
- **Figures 7A and 7B** show a parsing of one item of the "eyes" property in the "gaze" property of MPEG_node_avatar, according to the present principles.

## 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

Avatar's eyes direction is a key point of extended reality scene rendering as the gaze is very meaningful. For example, the VRM avatar format supports a "look at" gaze and proposes an extension of the glTF format that includes a descriptor. This solution allows to rotate each eye independently. However, it is limited to human eyes (two eyes, a left and right one). Furthermore, it does not use animations to rotate eyes: given a "look at" point, the application computes angles to rotate eyes and weights to apply on a node, a morph target, material color or texture transform. It is not possible to use changes on the avatar other than these ones. As a result, it provides less freedom than animations, which can be any combination of transforms, with or without nonlinearities. Only one gaze style can be used: it is not possible to signal how the "look at" gaze properties should be used. For instance, when an application is given a "look at" point, no information are signaled about how the application should go from the current gaze to a new gaze. For example, when an avatar is currently looking at some point A, and the application has to change the gaze direction, so the avatar now looks at some other point B. A default gaze style is to instantaneously switch to a gaze looking at point B. Other gaze styles could define a non-instantaneous gaze change. In these cases, the application can compute intermediate steps (like interpolated angles) between looking at point A and looking at point B. Then, the user can see the avatar moving the eyes from point A to point B at some speed and some dynamic (linear, first order, second order, etc.).

The application should have enough signaled information to know how to animate each eye (or anything considered as such), without ambiguities. Given a focus point to look at, the animation computes angles for each eye. Then, using the signaled information, the application computes parameters that change the avatar gaze such as it is looking to the focus point. In other words, the signaled information can be used as a function $f\_e\,(\alpha,\beta,\gamma)$ for eye e that maps angles $(\alpha,\beta,\gamma)$ into changes on the avatar.

Furthermore, the application should find in the signaled data information defined rules about the use of the gaze, or, in other words, a gaze style. Here are some examples (not exclusive, a style can define one or more of this properties). Allowed view angles: outside these angles, the avatar do not try to look at the point and has a default gaze. Same rotation angles when the point is far: for close points to look at, the avatar rotates its eyes independently, so each one is directed towards to the point. For far points to look at, the avatar does not rotate its eyes independently, and chooses the same angles for all eyes. Gaze dynamic: how the gaze should change from a set of angles values to another. In this case, the gaze style defines how to rotate the eyes from a current point to a new point to look at. If the gaze change is not instantaneous, the speed at which the eyes can be defined, as well as how the eyes move (linearly, first order, second order, etc.). A gaze style may involve more properties to be signaled, for instance a style may need a speed value to define how fast eyes focus to the point. According to the present principles, the rendering application should find in the signaled data information that uniquely identifies each eye. For instance, for human eyes, there is a unique id for the left eye and another one for the right eye. Eye identifiers can also be connected to the gaze style, for example a gaze style can imply a specific gaze style for each eye. For instance, a gaze style for a human can define that the left eye can move but not the right eye, or the left eye move faster than the right eye, and so on. This is possible since each eye is uniquely identified.

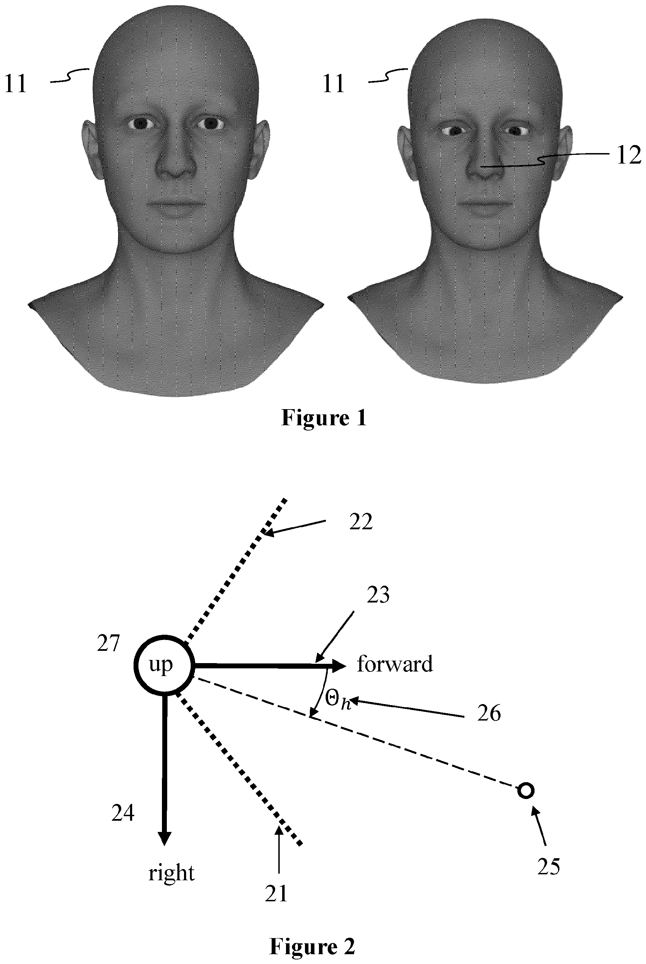

**Figure 1** illustrates how a "look at" gaze can be used with an avatar according to the present principles. Avatar 11 is used (this is the head of MORGAN MPEG avatar, version 2023). The head of avatar 11 is in a neutral state, without the use of dynamic features like morph targets or gaze. The eyes are facing the camera. If the application needs to have avatar 11 looking at its nose 12 for example, it can use the "look at" gaze information signaled with the avatar according to the present principles. In this case, the rendering application orients eyes to a point of nose 12, for instance the vertex coordinates of the tip of the nose. Eyes of avatar 11 are rotated in the following way. The right eye is rotated by 12 degrees around the bottom-up axis and -14 degrees around the left-right axis. The left eye is rotated by -12 degrees around the bottom-up axis and -14 degrees around the left-right axis. The computation of the rotation angles relies on the information signaled with the avatar according to the present principles. In this example, morph targets are also used to animate the eye lids according to the information signaled with the avatar in the scene description, which can be based on animations. Using animations, the creator of the avatar signal can freely change each eye of the avatar given rotation angles. In this example, this is a human character, but it could be a different object, like a fantasy animal with twelve eyes or a machine like a car or a robot.

**Figure 2** shows how an object like an eye may rotate on the horizontal plane according to the present principles. A 3D base of the eye is provided. This base is relative to three orthogonal axes: forward axis 23, bottom-up axis 27, and right axis 24. In the following examples, the base is right-handed, but it could be different in other configurations. The 3D coordinates of the center of the object (e.g. an eye) are provided, and the 3D base of the object is centered on this point. The rotation of the object around each axis is computed to make the eye look at a given point 25. Figure 2 illustrates the possible rotation around bottom-up axis 27. The plane orthogonal to bottom-up axis 27 (spanned the forward axis 23 and right axis 24), is called the horizontal plane herein.

For the horizontal plane, the eye can go from a minimum angle 21 to a maximum angle 22. Forward axis 23 corresponds to angle zero. Then, the goal of the rendering application is to compute angle $\theta_h$ 26 so that the eye looks at this point (projected onto the horizontal plane in the example of Figure 2). Then, a vector $p_h$ between the projection of the point to look at and the center of the eye is computed. Angle $\theta_h$ 23 between the forward axis is computed on this basis.

Similar rotations are possible on the plane orthogonal to the left-right axis (span by the forward and up axis), herein called the vertical plane. According to the same principles, for the vertical plane, the eye can go from a minimum to a maximum angle, and that angle zero corresponds to the forward axis (the eye is aligned with the forward axis). The application computes the angle $\theta_v$ so that the eye looks at point 25 projected onto the vertical plane. A vector $p_v$ between the projection of the point to look at and the center of the eye is computed, and the angle $\theta_v$ is determined on this basis. The eye can also roll. The plane orthogonal to the forward axis (spanned by the right and up axis), is called the roll plane herein. The roll plane is not used to look at a point. It can be used by the rendering application to roll the eye between a minimum and maximum angle relative to the opposite of the right axis.

In the current description, the proposed format follows the glTF format as an example and is compatible with the recent MPEG-I SD standard. All the following assumes right-handed axes, as is the case in glTF files. However, the meaning and use are generic and can be coded in other formats (XML, USD, ...).

| Name | Type | Description |
| --- | --- | --- |
| type | string | The type of the Avatar representation is provided as a Uniform Resource Name (URN). |
| mappings | AvatarMapping[1-*] | The mapping between child nodes and semantics. |
| gaze | Gaze | Gaze definition. |

The "gaze" property is, for instance, defined as follows:

| Name | Type | Description |
| --- | --- | --- |
| type | string | The gaze type, which can be "angular" or "lookAt". |
| if (type == "angular") { | | |
| horizontal | GazeAnimation | Gaze animation properties for the horizontal axis. |
| vertical | GazeAnimation | Gaze animation properties for the vertical axis. |
| roll | GazeAnimation | Gaze animation properties for the roll angle. |
| } | | |
| if (type == "lookAt") { | | |
| style | string | The gaze style, which defines how eyes move to the look at point. |

(continued)

| Name | Type | Description |
|------|------|-------------|
| speed | number | Defines the speed at which the eyes move to the look at point. Only used for non-instantaneous styles. |
| eyes | GazeEye[1-*] | List of properties for the gaze of each eye of the avatar. |
| } | | |

The "type" property defines the type of the gaze. Possible values comprise "angular" and "lookAt", but other extensions can propose new types. If "type" is "angular", then the avatar gaze is angular. In this case, the "horizontal", "vertical" and "roll" properties are used. Other properties are not used. If "type" is "lookAt", then "style" and "eyes" properties are required, and "speed" property may be used. Other properties are not used. The "style" property defines rules or hints about the usage of the gaze information. Values for "style" can be defined by an application or a standard. For example, if "style" is "instantaneous", then eyes are immediately rotated from the current look at point towards to the look at point, with no delay. Another value for "style" could be "linear", in which case eyes rotates linearly towards to the look at point, at a speed defined by the "speed" property. The "eyes" list defines properties for each eye, giving to the application the information it needs to rotate them towards to a look at point, for example according to the following format:

| Name | Type | Description |
|------|------|-------------|
| name | string | Name of the eye. |
| id | string | Eye identifier. |
| horizontal | GazeAnimation | Gaze animation properties for the horizontal plane of the eye. |
| vertical | GazeAnimation | Gaze animation properties for the vertical plane of the eye. |
| roll | GazeAnimation | Gaze animation properties for the roll plane of the eye. |
| center | number [3] | Coordinates of the center of the eye. |
| forward | number [3] | Forward axis of the eye |
| up | number [3] | Bottom-up axis of the eye. |
| right | number [3] | Left to right axis of the eye. |

The "name" property describes the name of the eye. It is not expected to follow values defined by and application or standard and can be used for retrieving an eye in the eyes list (as for all "name" properties in the glTF 2.0). The "id" property uniquely identifies the eye. Values must be defined by an application or a standard. For instance, a standard can define "human:left" as the identifier of a human left eye. In some embodiments, this property is an enum. The "horizontal", "vertical" and "roll" properties are GazeAnimation properties that define how to rotate the eye along an axis using an animation. An animation property references one of the animations in the glTF file. The beginning of the animation corresponds to the first angle of the "range" property, and the end of the animation to the second angle of the "range" property. In between angles are linearly interpolated. One can convert the rotation angle to the corresponding time using the following formula:

$$t = t_{max} \frac{\theta - \theta_{min}}{\theta_{max} - \theta_{min}}$$

where $\theta$ is the rotation angle to convert, $\theta_{min}$ is the minimum rotation angle (first value of the "range" property), $\theta_{max}$ is the maximum rotation angle (second value of the "range" property), $t_{max}$ is the maximum time value of the animation and t is the time corresponding the angle $\theta$.

The rotation axes are not the avatar canonical axes, but the ones defined by the "forward", "up" and "right" properties. If the "right" property is not defined, then it is deduced from the two others knowing the basis is right-handed. The "horizontal" property allows the application to rotate around the bottom-up axis of the eye. The "vertical" property allows the application to rotate around the right axis of the eye. The "roll" property is optional and allows the application to rotate around the forward axis of the eye. The "center" property is a (x,y,z) vector that defines the center of the eye. The renderer uses these properties to compute an angle for each eye axis/plane. These angles can be used directly, or modified, depending on the gaze style. For instance, if the gaze style is "linear", the computed angles in the previous step can be target angles, and the angles used to animate changes linearly from their current value to the target value. Angles can also be modified considering all eyes, also depending on the gaze style. For instance, a gaze style can force the same angles for each axis and for each eye. Then, these angles are converted into animation times. The corresponding animations are run using these times.

When there is more than one eye, there is more than one animation to run. In this case, the renderer follows the order of eye animations is the one in the "eyes" list. An MPEG_animation_mixer extension can be used in the "gaze" property of MPEG_node_avatar and in each item of the "eyes" property of the "gaze" property of MPEG_node_avatar. It is possible to use a mixing strategies defined in MPEG_animation_mixer overrides the previous ones. Each angle is associated with an animation, and when using at least two angles, animation mixing is required. The controller's disclosure assumes that the application handles how to mix the animations in the controllers. A mixing procedure is available, and mixing strategies can be specified in the animations and animation channels. Furthermore, the "gaze" property of "MPEG_node" extensions can have an "extensions" property with a "MPEG_animation_mixer" property that overrides default mixing strategies for all animations used for the avatar gaze. The "MPEG_animation_mixer" extension can also be used in properties "horizontal", "vertical" and "roll" to override default mixing strategies for each gaze angle. The "MPEG_animation_mixer" extension can also be used in (path are JSON path from the root of the glTF): "/nodes/[node index]/extensions/MPEG_node_avatar/gaze": overrides default mixing strategies for all animations used for avatar gaze in node [node index]; "/nodes/[node index]/extensions/MPEG_node_avatar/gaze/horizontal/extensions": overrides default mixing strategies for the animation used for horizontal avatar gaze in node [node index]; "/nodes/[node index]/extensions/MPEG_node_avatar/gaze/vertical/extensions": overrides default mixing strategies for the animation used for vertical avatar gaze in node [node index]; and "/nodes/[node index]/extensions/MPEG_node_avatar/gaze/roll/extensions": overrides default mixing strategies for the animation used for roll avatar gaze in node [node index].

For the sake of clarity, the following example only show parts of the glTF file related to avatar gaze: we assume that there is a scene with enough data to represent an avatar.

```
{
"animations" : [
  {
   "channels": [
    {
     "sampler": 0,
     "target": {
      "node": 1,
      "path": "weights" }
    }, {
     "sampler": 1,
     "target": {
      "node": 2,
      "path": "rotation" } } ],
   "samplers": [
    {
     "input": 10,
     "interpolation": "CUBICSPLINE",
     "output": 11
    }, {
     "input": 10,
     "interpolation": "LINEAR",
     "output": 12  }
   ]
  }, {
   "channels": [
    {
     "sampler": 0,
     "target": {
      "node": 1,
      "path": "weights" }
    }, {
     "sampler": 1,
```

```
     "target": {
      "node": 2,
      "path": "rotation" } } ],
  "samplers": [
   {
     "input": 14,
     "interpolation": "CUBICSPLINE",
     "output": 15
   }, {
     "input": 14,
     "interpolation": "LINEAR",
     "output": 16 } ] },
 {
  "channels": [
   {
     "sampler": 0,
     "target": {
      "node": 1,
      "path": "weights" }
   }, {
     "sampler": 1,
     "target": {
      "node": 3,
      "path": "rotation"
   } } ],
  "samplers": [
   {
     "input": 17,
     "interpolation": "CUBICSPLINE",
     "output": 18
   }, {
     "input": 17,
     "interpolation": "LINEAR",
     "output": 19 }
   ]
 }, {
```

```
  "channels": [
   {
     "sampler": 0,
     "target": {
      "node": 1,
      "path": "weights" }
   }, {
     "sampler": 1,
     "target": {
      "node": 3,
      "path": "rotation" } } ],
  "samplers": [
   {
     "input": 20,
     "interpolation": "CUBICSPLINE",
     "output": 21
   }, {
     "input": 20,
     "interpolation": "LINEAR",
     "output": 22 } ] }
],
"nodes": [
 {
   "children": [1,2,3],
   "extensions": {
    "MPEG node avatar": {
      "isAvatar": true,
      "type": "urn:mpeg:sd:2023:avatar",
      "mappings": [
       {
        "path": "full body/upper body/head",
        "node": 1
       }, {
        "path": "full body/upper body/head/face/eye_right",
        "node": 2
       }, {
        "path": "full body/upper body/head/face/eye_left",
        "node": 3 }
```

(continued)

```
        ],
      "gaze": {
       "type": "lookAt",
       "style": "linear",
       "speed": 0.1,
       "eyes": [
         {
          "id": "human:right",
          "horizontal": {
            "animation": 0,
            "range": [-45.0, 45.0]
          },
          "vertical": {
            "animation": 1,
            "min": [-30.0, 30.0]
          },
          "center": [-2.53, 150.54, 9.70],
          "forward": [0, 0, 1],
          "up": [0, 1, 0],
          "right": [-1, 0, 0]
         },
         {
          "id": "human:left",
          "horizontal": {
            "animation": 2,
            "range": [-45.0, 45.0]
          },
          "vertical": {
            "animation": 3,
            "min": [-30.0, 30.0]
          },
          "center": [2.78, 150.54, 9.76],
          "forward": [0, 0, 1],
          "up": [0, 1, 0],
          "right": [-1, 0, 0] } ] } } }
   }, {
     "mesh": 0
   }, {
     "mesh": 1,
     "translation": [-2.53, 150.54, 9.70]
   }, {
     "mesh": 2,
     "translation": [2.78, 150.54, 9.76] } ] }
```

The glTF parser first loads are content except the one of the MPEG_node_avatar extension. In this example, during this parsing, four animations arere found. animation 0: animates the right eye horizontally, animation 1: animates the right eye vertically, animation 2: animates the left eye horizontally, and animation 3: animates the left eye vertically. It decodes the MPEG_node_avatar content found in the first node. It indicates that the node is an avatar ("isAvatar" is true), the type is the standard one ("type" is "urn:mpeg:sd:2023 : avatar"), there are three parts: head, left and right eye ("mappings" property). The gaze is defined in the "gaze" property of MPEG_node_avatar. The gaze type is "lookAt", the gaze style is "linear" with a speed of 0.1. There are two eye gaze definitions in the "eyes" list of the "gaze" property. The first eye defined in the "eyes" list is the right eye ("id" is "human:right"). The horizontal animation is the one with index 0, with a minimum angle of -45 degrees and a maximum angle of 45 degrees. The vertical animation is the one with index 1, with a minimum angle of -30 degrees and a maximum angle of 30 degrees. The center is the location of the eye mesh. The rotation axis are: Z for forward, Y for up and -X for right. The second eye defined in the "eyes" list is the left eye ("id" is "human:left"). The horizontal animation is the one with index 2, with a minimum angle of -45 degrees and a maximum angle of 45 degrees. The vertical animation is the one with index 3, with a minimum angle of -30 degrees and a maximum angle of 30 degrees. The center is the location of the eye mesh. The rotation axis are: Z for forward, Y for up and -X for right.

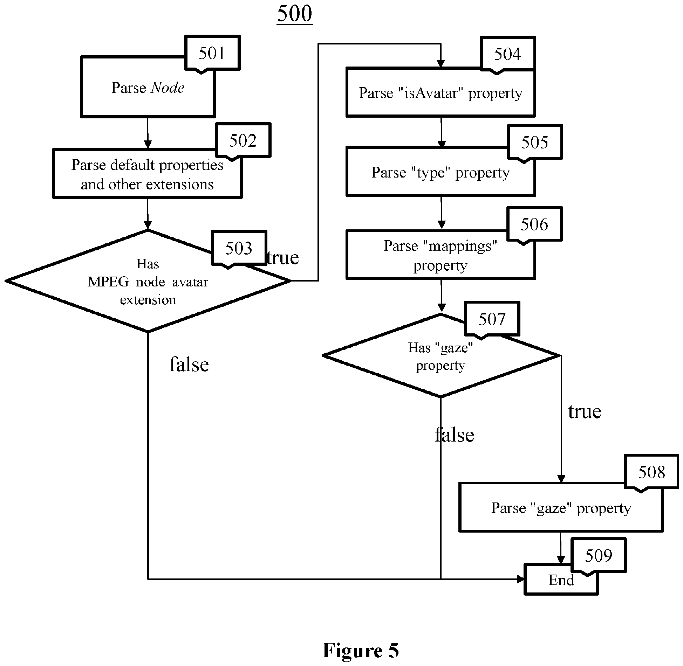

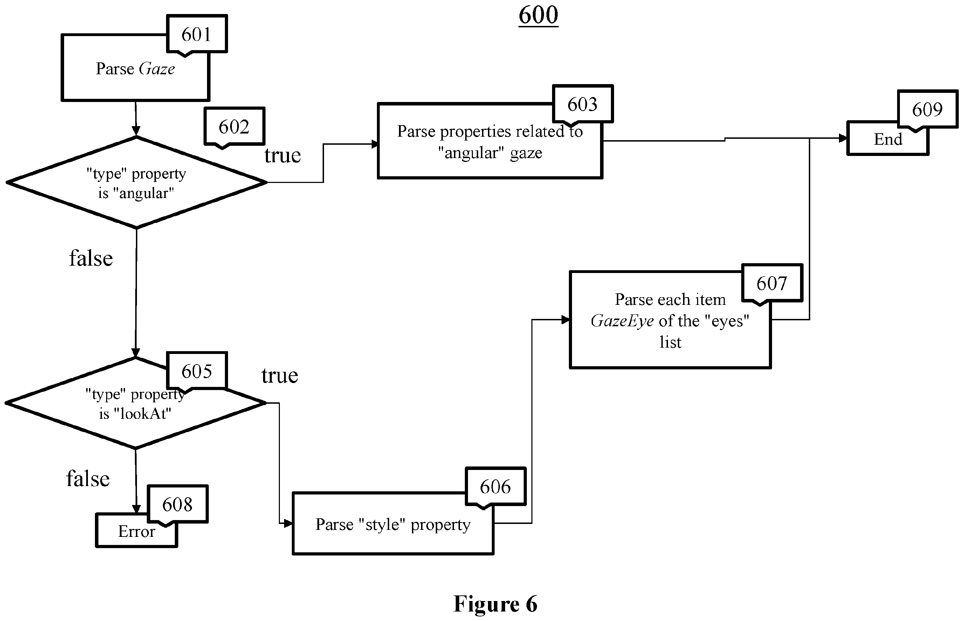

**Figure** 5 diagrammatically shows the parsing 500 of a node with support of the MPEG_node_avatar extension according to the present principles. At step 501, the process is started every time a node is being processed in the glTF file. At step 502, the glTF loader first decodes the standard properties and possible extensions. At step 503 if the MPEG_node_avatar is present, the loader parses it, otherwise parsing ends. At step 504, the "isAvatar" property is parsed (mandatory, error if not present). At step 505, the "type" property is parsed (mandatory, error if not present). At step 506, the "mappings" property is parsed (mandatory, error if not present). At step 507, the "gaze" property is parsed (508) if present as shown in Figure 6. At step 509, the result of the data found in the MPEG_node_avatar extension (if any) is stored in a dedicated structure and should not change the scene.

**Figure** 6 shows the parsing 600 of the "gaze" property in MPEG_node_avatar according to the present principles. At step 601, the process is started every time the glTF loader finds a "gaze" property in a MPEG_node_avatar extension. At steps 602 and 603, if the "type" property is "angular" then parse related properties. At steps 605, 606, and 607, if the "type" property is "lookAt" then parse the "horizontal" property: inside it, parse the "style" property and each item of the "eyes" list (see next section). At step 608, if the "type" property is not "angular" and not "lookAt", then parsing fails. At step 609, all the data found during the parsing of the "gaze" property is stored in a dedicated structure and does not change the scene.

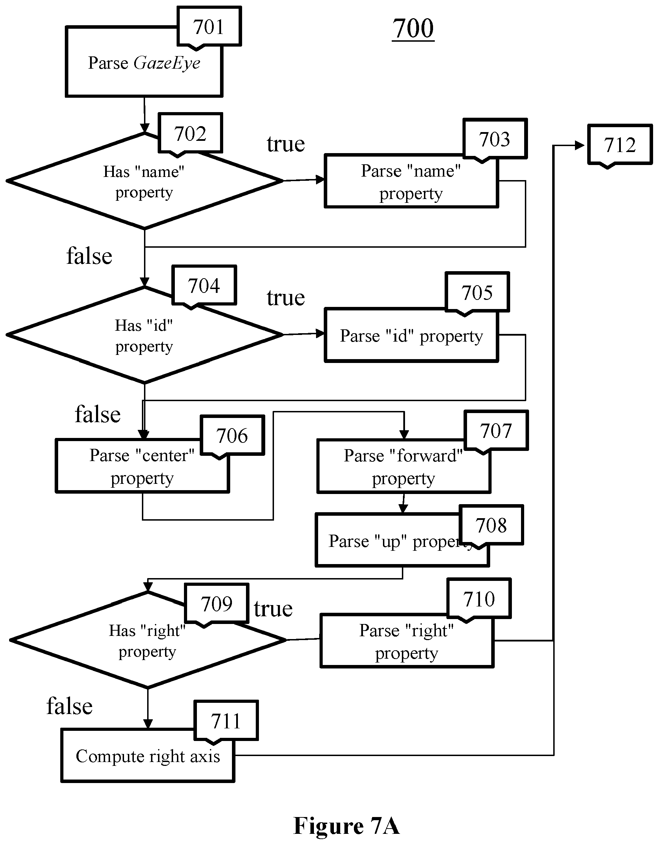

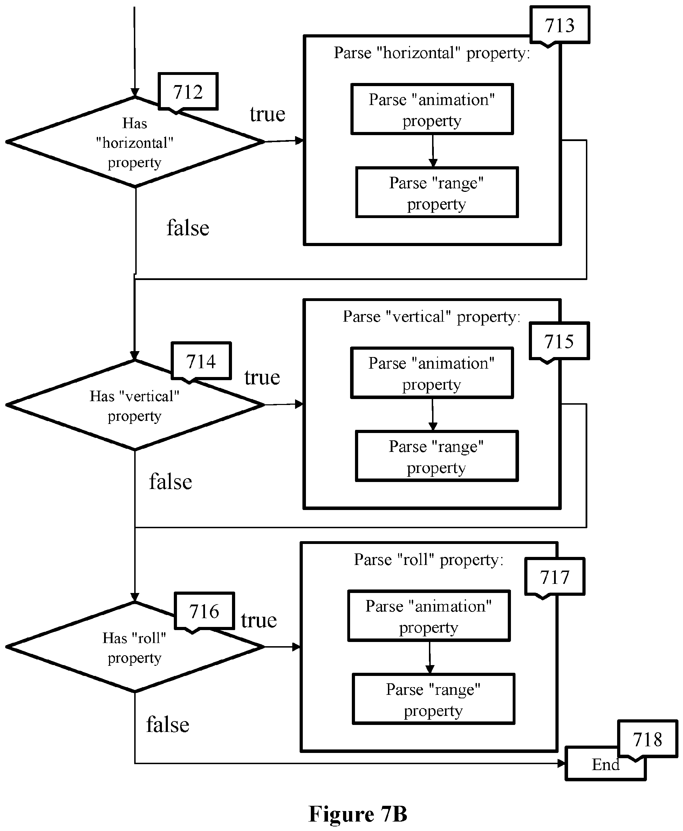

**Figures 7A and 7B** show a parsing 700 of one item of the "eyes" property in the "gaze" property of MPEG_node_avatar, according to the present principles. At step 701, this process is started when parsing an item of the "eyes" list of the "gaze" property of MPEG_node_avatar extension. At steps 702, 703, the "name" property is parsed if present. At steps 704, 705, the "id" property is parsed if present. At step 706, the "center" property is parsed. At step 707, the "forward" property is parsed. At step 708, the "up" property is parsed. At steps 709, 710, 711, if the "right" property is present, it is parsed. Otherwise the right axis is computed using the forward and up axis, knowing that the basis is right-handed. At steps 712, 713, if "horizontal" property is present, then the "horizontal" property is parsed and, with it, the "animation" and "range" properties. At steps 714, 715, if "vertical" property is present, then vertical" property is parse, and with it, the "animation" and "range" properties. At steps 716, 717, if "roll" property is present, the "roll" property is parsed, and with it, the "animation" and "range" properties. At step 718, all data found during the parsing of the item of "eyes" list is stored in a dedicated structure and does not change the scene.

The gaze can be used to animate the eyes of an avatar in a virtual world. For instance, to ensure that the avatar is looking in the direction of the user camera. In most applications, the user can orient where (s)he looks at with the mouse or the gamepad. Using the proposed format, the avatar eyes can follow this orientation, without the need of a prior knowledge. Indeed, the gaze animations are not restricted to eyes: the animations associated with the gaze can also orient the head of the avatar (and anything else as long as it is an animation). As a result, when other users see another avatar, they can see its eyes and head moving when its owner looks around. Some visio conference systems replace the user with an avatar head. Thanks to the present principles, the application can control the gaze of the avatar, without any prior knowledge. For instance, it can ensure that the avatar is always looking forward, add automatic realistic eye movements, capture eye movements at the client side and use it to update the gaze at the other side, etc. In 3D asset creation, standard glTF files provides animations but there is no standard way to know which ones are related to gaze, and also no instructions on how to use them. With the present principles, a creation tool supporting the extension can show that the glTF contains an avatar and add a dedicated UI components to control and animate the gaze.

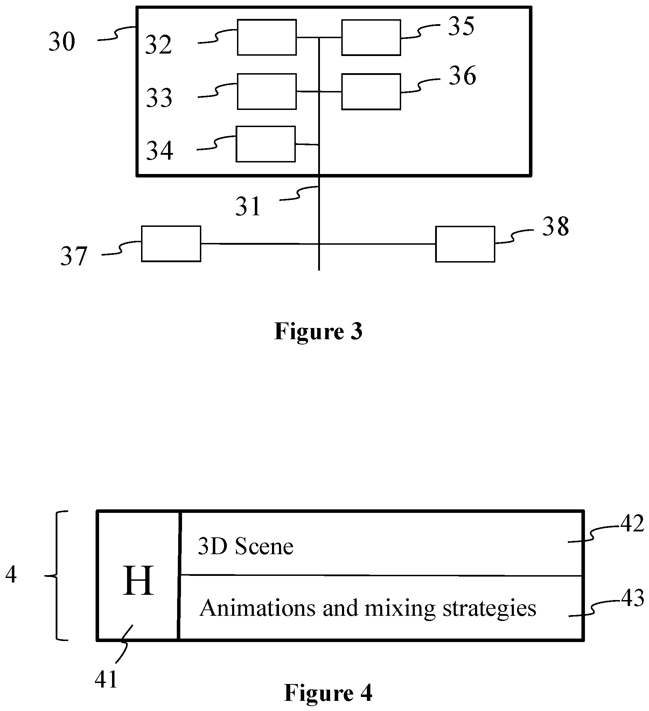

**Figure 3** shows an example architecture of a device 30 which may be configured to implement avatar look at gaze in scene description methods according to embodiments of the present principles. The device is linked with other devices via their bus 31 and/or via I/O interface 36.

Device 30 comprises following elements that are linked together by a data and address bus 31:D

- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method according to the present principles of look at gaze of avatars of an extended reality scene, and belongs to a set comprising:

- a mobile device;
- a communication device;
- a game device;
- a tablet (or tablet computer);
- a laptop;
- a still picture camera;
- a video camera.

**Figure 4** shows an example of an embodiment of the syntax of a stream when the data are transmitted over a packet-based transmission protocol. Figure 4 shows an example structure 4 of a stream encoding a 3D scene comprising animated objects according to the present principle. The structure consists in a container which organizes the stream in independent elements of syntax. The structure may comprise a header part 41 which is a set of data common to every syntax element of the stream. For example, the header part comprises some of metadata about syntax elements, describing the nature and the role of each of them. The structure comprises a payload comprising an element of syntax 42 and at least one element of syntax 43 (there may be an element of syntax 43 for each animation for example). Syntax element 42 comprises data representative of the 3D scene. It comprises a scene description and data necessary to render the objects of the 3D scene (e.g. meshes, textures, lighting, etc.). Element of syntax 43 is a part of the payload of the data stream and may comprise data encoding the animations of the objects of the scene (channels and samplers). According to the present principles, metadata comprising every information needed for managing eyes (or equivalent rotating objects) of avatars are encoded, for example, in element of syntax 43. So, the data stream comprises data representative of a scene description, and data representative of two or more animations. Each animation comprises a one or more animation channels, and each channel targets one property of one node of a scene description. The data stream may also comprise data representative of a mixing strategy for one or more property kinds.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method comprising:

   - obtaining a three-dimensional (3D) scene comprising one or more avatars having one or more subcomponents having rotatable gaze feature;
   - generating a scene description comprising a scene graph, wherein nodes corresponding to the one or more subcomponents comprise a gaze information indicating a type of animation for the one or more subcomponents and parameters to run the animation; and
   - encoding the 3D scene and the scene description in a data stream.

2. The method of claim 1, wherein the type of animation belongs to a group of types comprising angular type and wherein parameters comprise an horizontal rotation, a vertical rotation and a roll rotation, and look at a point type wherein parameters comprise a style parameter, a speed parameter and a list of properties for the gaze of each of the one or more subcomponents of the avatar.

3. The method of claim 2, wherein properties for the gaze of each of the one or more subcomponents of the avatar belong to a group of properties comprising: properties for horizontal animation, properties for vertical animation, coordinates of the center of the subcomponent, forward axis, and bottom-up axis.

4. A device comprising a memory associated with at least one processor configured for:

   - obtaining a three-dimensional scene comprising one or more avatars having one or more subcomponents having rotatable gaze feature;
   - generating a scene description comprising a scene graph, wherein nodes corresponding to the one or more subcomponents comprise a gaze information indicating a type of animation for the at least one component and parameters to run the animation; and
   - encoding the 3D scene and the scene description in a data stream.

5. The device of claim 4, wherein the type of animation belongs to a group of types comprising angular type and wherein parameters comprise an horizontal rotation, a vertical rotation and a roll rotation, and look at a point type wherein parameters comprise a style parameter, a speed parameter and a list of properties for the gaze of each of the one or more subcomponents of the avatar.

6. The device of claim 5, wherein properties for the gaze of each of the one or more subcomponents of the avatar belong to a group of properties comprising: properties for horizontal animation, properties for vertical animation, coordinates of the center of the subcomponent, forward axis, and bottom-up axis.

7. A method comprising:

- decoding a three-dimensional scene comprising one or more avatars having one or more subcomponents having rotatable gaze feature from a data stream, comprising a scene description comprising a scene graph, wherein nodes corresponding to the one or more subcomponents comprise a gaze information indicating a type of animation for the at least one component and parameters to run the animation; and
- rendering the 3D scene rand run the animations of the one or more subcomponents according to their parameters.

8. The method of claim 7, wherein the type of animation belongs to a group of types comprising angular type and wherein parameters comprise an horizontal rotation, a vertical rotation and a roll rotation, and look at a point type wherein parameters comprise a style parameter, a speed parameter and a list of properties for the gaze of each of the one or more subcomponents of the avatar.

9. The method of claim 8, wherein properties for the gaze of each of the one or more subcomponents of the avatar belong to a group of properties comprising: properties for horizontal animation, properties for vertical animation, coordinates of the center of the subcomponent, forward axis, and bottom-up axis.

10. A device comprising a memory associated with at least one processor configured for:

- decoding a three-dimensional (3D) scene comprising one or more avatars having one or more subcomponents having rotatable gaze feature from a data stream, comprising a scene description comprising a scene graph, wherein nodes corresponding to the one or more subcomponents comprise a gaze information indicating a type of animation for the at least one component and parameters to run the animation; and
- rendering the 3D scene rand run the animations of the one or more subcomponents according to their parameters.

11. The device of claim 10, wherein the type of animation belongs to a group of types comprising angular type and wherein parameters comprise an horizontal rotation, a vertical rotation and a roll rotation, and look at a point type wherein parameters comprise a style parameter, a speed parameter and a list of properties for the gaze of each of the one or more subcomponents of the avatar.

12. The device of claim 11, wherein properties for the gaze of each of the one or more subcomponents of the avatar belong to a group of properties comprising: properties for horizontal animation, properties for vertical animation, coordinates of the center of the subcomponent, forward axis, and bottom-up axis.

13. A data stream comprising data representative of a scene description, data representative of two or more animations, wherein each animation comprises a one or more animation channels, wherein each channel targets one property of one node of a scene description, and data representative of a mixing strategy for one or more property kinds.

14. The data stream of claim 13, wherein the type of animation belongs to a group of types comprising angular type and wherein parameters comprise an horizontal rotation, a vertical rotation and a roll rotation, and look at a point type wherein parameters comprise a style parameter, a speed parameter and a list of properties for the gaze of each of the one or more subcomponents of the avatar.

15. The data stream of claim 14, wherein properties for the gaze of each of the one or more subcomponents of the avatar belong to a group of properties comprising: properties for horizontal animation, properties for vertical animation, coordinates of the center of the subcomponent, forward axis, and bottom-up axis.

**Figure 1**

**Figure 2**

30

32

33

34

31

37

35

36

38

**Figure 3**

4

H

41

3D Scene

42

Animations and mixing strategies

43

**Figure 4**

<u>500</u>

**Figure 5**

Figure 6

EP 4 676 070 A1

<u>700</u>

**Figure 7A**

**Figure 7B**

Europäisches
Patentamt

European
Patent Office

Office européen
des brevets

## EUROPEAN SEARCH REPORT

**Application Number**

EP 24 30 6120

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hirose Junichi ET AL: "VRM 1.0 Specification - Readme, Expressions, LookAt", comprises the content of files README.md commit 1775c01 of 01-11-2023; expressions.md commit 7173e5c of 22-09-2022 2022-09-22; lookAt.md commit deb2736 of 30-08-2023;, 1 November 2023 (2023-11-01), XP093232372, GitHub Retrieved from the Internet: URL:https://github.com/vrm-c/vrm-specification/tree/master/specification/VRMC_vrm-1.0 * page 2 - page 7 * * page 16 - page 18 * ----- | 1-15 | INV. H04N21/854 H04N21/44 H04N21/81 H04N21/234 H04N21/8543 H04N19/25 G06T13/40 |
| X | "Information technology - Runtime 3D asset delivery format - Khronos glTF(TM) 2.0", ISO/IEC 12113:2022, IEC, 3, RUE DE VAREMBÉ, PO BOX 131, CH-1211 GENEVA 20, SWITZERLAND , 26 July 2022 (2022-07-26), pages 1-189, XP082045317, Retrieved from the Internet: URL:https://api.iec.ch/harmonized/publications/download/3038945 [retrieved on 2022-07-26] | 13 | |
| A | * page 74 - page 81 * * Annex C. * ----- | 1-12,14, 15 | TECHNICAL FIELDS SEARCHED (IPC) H04N G06T |
|  | -/-- | | |

The present search report has been drawn up for all claims

| Place of search | Date of completion of the search | Examiner |
|---|---|---|
| Munich | 9 December 2024 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

**EUROPEAN SEARCH REPORT**

Europäisches Patentamt
European Patent Office
Office européen des brevets

**Application Number**

EP 24 30 6120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TEKALP A M ET AL: "Face and 2-D mesh animation in MPEG-4", SIGNAL PROCESSING. IMAGE COMMUNICATION, ELSEVIER SCIENCE PUBLISHERS, AMSTERDAM, NL, vol. 15, no. 4-5, 1 January 2000 (2000-01-01), pages 387-421, XP027357197, ISSN: 0923-5965 [retrieved on 2000-01-01] * section 2 Face animation * ----- | 1-15 | |
| A | "Information technology - Coding of audio-visual objects - Part 11: Scene description and application engine", ISO/IEC 14496-11:2015, IEC, 3, RUE DE VAREMBÉ, PO BOX 131, CH-1211 GENEVA 20, SWITZERLAND , 2 November 2015 (2015-11-02), pages 1-547, XP082070792, Retrieved from the Internet: URL:https://api.iec.ch/harmonized/publications/download/119914 [retrieved on 2015-11-02] * page 82 - page 91 * ----- -/-- | 1-15 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 9 December 2024 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .........................................................................
& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 24 30 6120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FABIEN DANIEAU ET AL: "[SD] EE on User Representation and Avatars", 138. MPEG MEETING; 20220425 - 20220429; ONLINE; (MOTION PICTURE EXPERT GROUP OR ISO/IEC JTC1/SC29/WG11), , no. m59269 22 April 2022 (2022-04-22), XP030301416, Retrieved from the Internet: URL:https://dms.mpeg.expert/doc_end_user/documents/138_OnLine/wg11/m59269-v2-m59269_EE_Avatars_proposal.zip m59269_EE_Avatars_proposal.docx [retrieved on 2022-04-22] * the whole document * | 1-15 | |

TECHNICAL FIELDS
SEARCHED (IPC)

The present search report has been drawn up for all claims

| Place of search | Date of completion of the search | Examiner |
|---|---|---|
| Munich | 9 December 2024 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3